# NEUE EUROPÄISCHE PATENTSCHRIFT

(11) **EP 3 018 342 B2**
(45) Veröffentlichungstag und Bekanntmachung des Hinweises auf die Entscheidung über den Einspruch: **06.03.2024**
(45) Hinweis auf die Patenterteilung: 10.01.2018
(21) Anmeldenummer: 15189493.8
(22) Anmeldetag: 13.10.2015
(51) Int. Cl.: F03D 1/06, B29D 99/00, B29C 70/44

(54) **VERFAHREN ZUM HERSTELLEN EINES ROTORBLATTS EINER WINDENERGIEANLAGE**
METHOD FOR PRODUCING A ROTOR BLADE OF A WIND TURBINE
PROCEDE DE FABRICATION D'UNE PALE DE ROTOR D'EOLIENNE

(30) Priorität: 28.10.2014 DE 102014221966
(43) Veröffentlichungstag der Anmeldung: 11.05.2016
(73) Patentinhaber: Siemens Gamesa Renewable Energy Service GmbH, 20097 Hamburg (DE)
(72) Erfinder: ZELLER, Lenz Simon, 24242 Felde (DE); EYB, Enno, 24116 Kiel (DE)
(74) Vertreter: Wallinger Ricker Schlotter Tostmann

(56) Entgegenhaltungen:
- EP-A1- 2 567 807
- EP-A1- 2 617 558
- EP-B1- 2 217 748
- EP-B1- 2 524 134
- EP-B2- 1 892 071
- WO-A1-2006/015598
- WO-A1-2011/076857
- WO-A1-2011/088372
- WO-A1-2012/013192
- WO-A1-2013/007351
- WO-A1-2014/079456
- WO-A1-2014/079456
- WO-A1-2014/166493
- WO-A1-2015/067281
- WO-A1-2015/067281
- DE-A1-102008 045 601
- DE-A1-102011 078 951
- DE-A1-102011 078 951
- DE-A1-102012 219 226
- DE-C1- 10 214 340
- DK-T3- 2 731 772
- US-A1- 2008 181 781
- US-A1- 2009 148 655
- US-A1- 2010 084 079
- US-A1- 2012 027 609
- US-A1- 2014 186 588
- US-B2- 8 789 275
- Erich Hau: "Wind Turbines - Fundamentals, Technologies, Application, Economics, 2nd ed.", 2006 pages 234-235,
- Edgar SUSELBEEK: "Harmonising design & manufacturing of rotor blades", Advances in rotor blades for wind turbines,, 26 February 2013 (2013-02-26), pages 1-17,
- Ausdruck der Internetseite http://www.pontis-enqineerinq.com/download s
- Flyer zur Pontis Preforming Technology
- Herrmann A. S. et al., "Kostengünstige Faserverbundstrukturen - eine Frage neuer Produktionsansätze" 3 AVK-TV Tagung Baden-Baden 2000
- Sickinger, C. et al, "Structural Stitching as a Method to design High -Performance Composites in future" DLR2001
- SANDIA-Report SAND2002-1879 ?Blade System Design Studies Volume I: Composite Technologies for Large Wind Turbine Blades". Juli 2002
- Dissertation ?Nähen als Montageverfahren textiler Preforms
- Beier, Uwe et al, "Kosteneffiziente Preform prozess kette für komplexe Hochleistungs-Faserverbund-Strukturbauteil e" Zeitschrift Kunststofftechnik/Journal of Plastics Technology. 2009.
- Konferenzbeitrag ?Automated production of textile preforms forstructural fibre reinforced plastic components", November 2009
- Ohlendorf Jan-Hendrik et al.. ?Innovationen in der Handhabungs- und Textiltechnik zur Rotorblattfertigung", Light weight design Mai 2013.
- Präsentation ?Department of Energy Advanced Manufacturing Initiative Blades" vom 30. Mai 2012

## Beschreibung

Die Erfindung betrifft ein Verfahren zum Herstellen eines Rotorblatts einer Windenergieanlage, wobei zumindest ein im Bereich einer Rotorblattwurzel vorgesehenes Rotorblattschalensegment des Rotorblatts in einer als Negativ-Form ausgebildeten Hauptform hergestellt wird und das Rotorblattschalensegment mit zumindest einem weiteren Rotorblattschalensegment zum Herstellen zumindest eines Teils des Rotorblatts zusammengefügt wird.

Rotorblätter für Windenergieanlagen werden vielfach in Schalenbauweise gefertigt. Ein solches Rotorblatt besteht üblicherweise aus einer Saugseitenschale und einer Druckseitenschale. Die Saugseite des Rotorblattprofils wird durch die Außenseite der Saugseitenschale und die Druckseite des Rotorblattprofils durch die Außenseite der Druckseitenschale gebildet. Die Rotorblattschalen werden in Hauptformen hergestellt und nach dem Aushärten in ihren Formen zum Rotorblatt zusammengesetzt und miteinander verbunden. Die Rotorblattschalen werden vielfach aus faserverstärkten Kunststoffen hergestellt, beispielsweise aus glas- oder kohlefaserverstärkten Polyester- oder Epoxidharzen.

Zum Herstellen des Faserverbundwerkstoffs werden Fasergelege oder Fasermatten gemeinsam mit weiteren Bauteilen, wie beispielsweise Kernmaterial, und den Rotorblattgurten, in die Hauptformen der Rotorblattschalen eingelegt und anschließend in einem Harzinfusionsverfahren vergossen. Bei diesem Vorgang wird zähflüssiges Kunstharz unter Unterdruck in die trockenen Fasergelege aus Glas- oder Kohlefasern eingesogen. So füllen sich die Zwischenräume zwischen den Fasern mit Kunstharz und die Saugseitenschale bzw. die Druckseitenschale des Rotorblatts entsteht.

Im Bereich der Rotorblattwurzel, welche mit Bolzen an einer Rotornabe der Windenergieanlage befestigt wird, ist das Rotorblatt im Querschnitt zumindest näherungsweise kreisrund. Da im Bereich der Rotorblattwurzel große Kräfte wirken, welche in die Rotornabe eingeleitet werden, ist das Rotorblatt in diesem Bereich außerdem mit großer Wandstärke ausgeführt. Häufig ist die Rotorblattschale zusätzlich zu den Fasergelegen mit einem leichten jedoch festen Kernmaterial verstärkt, welches in die Fasergelege eingebettet wird. Kernmaterial in einem solchen in Sandwich-Bauweise hergestellten Rotorblatt kann beispielsweise aus Balsaholz oder Schaumstoff oder Polymermaterial hergestellt sein. Die Sandwich-Struktur erlaubt es, ein leichtes und gleichzeitig stabiles Rotorblatt herzustellen.

Bei der Herstellung der Rotorblattschalen ist es jedoch schwierig, an den steil aufragenden Seitenwänden der Hauptform eine Vielzahl übereinandergeschichteter Fasergelege genau zu positionieren und gleichzeitig sicherzustellen, dass diese nicht aufeinander abrutschen. Es ist vielfach notwendig, die Faserlagen zu fixieren, was den Herstellungsprozess verkompliziert. Aufgrund der großen Durchmesser moderner Rotorblätter im Bereich der Rotorblattwurzel sind die Hauptschalen außerdem schwer zugänglich.

DE 10 2011 078 951 A1 offenbart ein Verfahren zum Herstellen eines Rotorblatts für eine Windenergieanlage. Das Rotorblatt wird im Bereich der Rotorblattwurzel in einer als Negativform ausgebildeten Hauptform hergestellt. Zunächst wird ein Sandwich-Preform mit einer Sandwich-Struktur aus Fasergelegen und flächig zwischen den Fasergelegen eingelegtem Kernmaterial hergestellt und anschließend gemeinsam mit Fasermatten in die Hauptform eingelegt. Mittels eines Harzinfusionsverfahrens werden die in die Hauptform eingelegten Sandwich-Preforms und das Fasermaterial verbunden. Aus WO 2014/079456 A1 ist ein Verfahren zum Herstellen eines Rotorblattgurts bekannt, bei dem aus trockenem Fasermaterial der Rotorblattgurt hergestellt wird. Ein weiteres Verfahren zum Herstellen eines Rotorblattgurts ist aus WO 2015/067281 A1 bekannt. Dieser Rotorblattgurt wird aus einer Vielzahl von Prefabs hergestellt. Es ist eine Aufgabe der Erfindung, ein Verfahren zum Herstellen eines Rotorblatts einer Windenergieanlage anzugeben, wobei die Herstellungsdauer des Rotorblatts verringert sein soll.

Die Aufgabe wird gelöst durch ein Verfahren gemäß Anspruch 1.

Im Kontext der vorliegenden Beschreibung wird unter einem "Prefab" ein vorgefertigtes Bauteil eines Rotorblatts einer Windenergieanlage aus einem Faserverbundwerkstoff verstanden. Der Faserverbundwerkstoff des Prefabs ist mit Harz infusioniert; das Prefab ist ausgehärtet. Ein typisches Beispiel für ein Prefab ist ein Rotorblattgurt.

Unter einem "Preform" wird im Kontext der vorliegenden Beschreibung ein vorgeformtes und endkonturnahes Bauteil eines Rotorblatts einer Windenergieanlage aus einem Fasermaterial verstanden, welches nicht infusioniert ist. Es handelt sich um ein Halbzeug, also ein Vorprodukt, dessen Fasern, Fasergelege oder Fasermatten so untereinander verbunden sind, dass das Preform eine ausreichende Stabilität und Steifigkeit aufweist, so dass es während des Herstellungsprozesses des Rotorblatts, insbesondere während des Einlegens in eine Hauptform, problemlos handhabbar ist. Beispielsweise ist das Fasermaterial des Preforms mit einem Bindemittel verklebt. Ebenso ist es möglich, dass die Fasern, Fasergelege oder Fasermatten miteinander vernäht sind oder teilweise miteinander verschmolzen sind.

Ferner wird im Kontext der vorliegenden Beschreibung unter dem "Bereich der Rotorblattwurzel", der auch als "Rotorblattwurzelbereich" bezeichnet werden soll, ein Bereich des Rotorblatts verstanden, der sich ausgehend von der Rotorblattwurzel in Richtung einer Rotorblattspitze des Rotorblatts, also Längserstreckungsrichtung des Rotorblatts, erstreckt. Der Rotorblattwurzelbereich erstreckt sich in einem Bereich des Rotorblatts, in dem dieses nicht oder nur geringfügig aerodynamisch wirksam ist. Es handelt sich um den Übergangsbereich zwischen der Blattwurzel und einem aerodynamisch wirksamen Bereich des Rotorblatts. Im Bereich der Rotorblattwurzel findet ein Übergang von einem zumindest näherungsweise kreisrunden Querschnitt des Rotorblatts am Anschlussflansch hin zu einem aerodynamisch wirksamen Profil statt. Im Rotorblattwurzelbereich weist das Rotorblatt die im Vergleich zu den übrigen Bereichen des Rotorblatts größte Wandstärke auf. Der Rotorblattwurzelbereich erstreckt sich entlang des vollen Umfangs des Rotorblatts, also ausgehend von der Rotorblattvorderkante entlang der Saugseite bis zur Rotorblatthinterkante und entlang der Druckseite zurück bis zur Rotorblattvorderkante.

Die exakte Größe des Rotorblattwurzelbereichs in Längserstreckungsrichtung des Rotorblatts ist vom Typ des Rotorblatts abhängig. Beispielsweise erstreckt sich der Rotorblattwurzelbereich über 20%, insbesondere 15%, weiterhin insbesondere 10% und ferner insbesondere 5% der Gesamtlänge des Rotorblatts, gemessen von der Rotorblattwurzel. Die Gesamtlänge des Rotorblatts wird zwischen der Rotorblattspitze und der Rotorblattwurzel, beispielsweise bis zu einem Anschlussflansch zum Anschluss an die Rotornabe, gemessen.

Die Erfindung beruht auf der Erkenntnis, dass durch Integration von Prefabs in Preforms eine deutliche Beschleunigung des Herstellungsverfahrens eines Rotorblatts für eine Windenergieanlage erreicht wird. Anstatt wie bisher üblich Prefabs in den trockenen Aufbau des Rotorblatts einzubetten, d. h. in die Gelege oder Gelegelagen einzulegen und ggf. mit weiteren Lagen zu überdecken, wird das Prefab in ein Preform eingebettet bzw. integriert. Das Prefab wird mit dem Preform zu einer Baueinheit verbunden, welche anschließend weiterverarbeitet wird.

Da diese Baueinheit eine ausreichend hohe Eigenstabilität aufweist, kann die Gefahr für ein Abrutschen der Gelegelagen praktisch beseitigt werden. Die Notwendigkeit, die Gelegelagen durch zusätzliche Mittel, wie beispielsweise ein Vernähen, untereinander zu fixieren, erübrigt sich vorteilhaft.

Ferner ist es möglich, eine Vielzahl von Preforms in zeitlich parallelen Prozessen herzustellen, so dass diese zum Herstellen der Rotorblattschalen in den Hauptformen zeitgleich zur Verfügung stehen. Vorteilhaft erfolgt die Herstellung dieser Preforms flach liegend, so dass die Gefahr für ein Abrutschen der Gelegelagen minimal ist.

Anschließend werden derartige Preforms einschließlich der eingebetteten Prefabs insbesondere in die steilen Bereiche der Hauptform eingesetzt, ohne dass die Gefahr für ein Abrutschen des Prefabs besteht.

Es ist ferner vorteilhaft möglich, große vorgefertigte Einheiten vorzubereiten bzw. herzustellen, was die Herstellung von großen Rotorblättern mit großen Spannweiten im Bereich zwischen 50 m und 80 m deutlich beschleunigt.

Der Herstellungsprozess des Rotorblatts wird beschleunigt. Es ist bevorzugt möglich, die Herstellung des Rotorblatts innerhalb von 24 Stunden abzuschließen.

Gemäß einer Ausführungsform ist das Verfahren zum Herstellen eines Rotorblatts dadurch fortgebildet, dass das Preform eine Sandwich-Struktur aus Fasergelegen und flächig zwischen den Fasergelegen eingelegtem Kernmaterial ist, wobei zum Herstellen des Preforms Fasergelege und Kernmaterial flächig aufeinander geschichtet und miteinander verbunden werden, wobei das Prefab zwei einander gegenüberliegende große Seitenflächen und zwei einander gegenüberliegende kleine Seitenflächen aufweist, wobei die großen und die kleinen Seitenflächen jeweils an zwei ihrer Seitenkanten aneinanderstoßen, und wobei das Prefab in das Preform eingebettet wird, indem Fasergelege des Preforms an zumindest eine der zwei großen Seitenflächen des Prefabs angelegt wird und das Fasergelege die zumindest eine große Seitenfläche zumindest teilweise, insbesondere vollständig, überdeckt.

Insbesondere werden die Fasergelege des Preforms mit einem Bindemittel miteinander verbunden. Ferner ist gemäß weiterer Ausführungsformen vorgesehen, dass die Fasergelege untereinander das Kernmaterial durch Heften oder Vernähen miteinander verbunden werden. Ebenso ist es möglich, die Materialien untereinander teilweise zu verschmelzen. Gleiches gilt auch für die Verbindung zwischen den Fasergelegen und dem Kernmaterial. Wichtig ist, dass das Preform nicht infusioniert ist. Es wird also nicht in einem Infusionsverfahren, beispielsweise einem Vakuuminfusionsverfahren, mit Kunstharz beaufschlagt.

Ferner ist insbesondere vorgesehen, dass die beiden einander gegenüberliegenden großen Seitenflächen des Prefabs vom Fasergelege des Preforms zumindest teilweise, insbesondere vollständig überdeckt sind.

Die Fasergelege des Preforms werden zuerst mit dem Kernmaterial des Preforms, insbesondere beidseitig, verbunden, wobei das Fasermaterial das Kernmaterial an zumindest einer Seitenkante überragt. In der so entstehenden Ausnehmung wird anschließend das Prefab angeordnet. Die Fasergelege werden insbesondere direkt, d.h. unmittelbar, an die großen Seitenflächen des Prefabs angelegt. Mit anderen Worten steht also das Fasergelege im direkten Kontakt mit zumindest einem Teil der großen Seitenflächen des Prefabs. Anschließend werden Preform und Prefab miteinander verbunden, wobei insbesondere ein Binder zum Einsatz kommt.

Gemäß einer weiteren Ausführungsform ist vorgesehen, dass das Prefab in das Preform eingebettet wird, indem zumindest eine kleine Seitenfläche an das Kernmaterial des Preforms angelegt wird.

Insbesondere ist vorgesehen, dass die zumindest eine kleine Seitenfläche des Prefabs unmittelbar an das Kernmaterials des Preforms angelegt wird. Das Kernmaterial des Preforms und die kleine Seitenfläche des Prefabs stehen also im direkten Kontakt zueinander.

Vorteilhaft ist das Verfahren ferner dadurch fortgebildet, dass beim Herstellen des Preforms eine an die Ausmaße des Prefabs angepasste Aufnahme vorgesehen wird, wobei die Aufnahme so gestaltet ist, dass beim Einbetten des Prefabs in das Preform an zumindest einer kleinen Seitenfläche des Prefabs Fasergelege des Preforms anliegt.

Eine solche Ausführungsform ist vorteilhaft geeignet, um beispielsweise einen Hinterkantengurt des Rotorblatts in das Preform einzubetten. Gemäß einer weiteren Ausführungsform ist das Prefab ein Rotorblattgurt. Insbesondere ist dieser Rotorblattgurt ein Hauptgurt oder ein Hinterkantengurt des Rotorblatts.

Gemäß einer weiteren Ausführungsform ist vorgesehen, dass das Rotorblattschalensegment eine Druckseitenschale oder eine Saugseitenschale ist und zum Herstellen des Rotorblatts die Druckseitenschale und die Saugseitenschale zusammengefügt werden. Beispielsweise werden die Druckseitenschale und die Saugseitenschale miteinander verklebt.

Insbesondere zur Beschleunigung des Verfahrens zum Herstellen eines Rotorblattes einer Windenergieanlage ist gemäß der Erfindung vorgesehen, dass das Prefab in das Preform eingebettet und außerdem Preform und Prefab miteinander verbunden werden. Beispielsweise werden die beiden Teile mit einem Binder verbunden. Das hergestellte Bauteil wird anschließend in die Hauptform eingelegt.

Vorteilhaft ist es möglich, große vorgefertigte Bauteile oder Halbzeuge herzustellen, so dass eine vergleichsweise geringe Anzahl dieser Bauteile ausreichend ist, um das notwendige Fasermaterial in die Hauptform einzubringen. So lassen sich Rotorblätter mit großer Länge innerhalb kurzer Zeit herstellen.

Gemäß einer weiteren Ausführungsform ist vorgesehen, dass das vorgefertigte Bauteil in einen Bereich der Hauptform eingelegt wird, dessen Steigung, betrachtet in einer Profilebene des Rotorblatts, mit einer Profilsehne des Rotorblatts einen Winkel einschließt, der größer als 45° ist.

Die Steigung wird bevorzugt wie folgt definiert. Es wird im Bereich der Hauptform, in den das vorgefertigte Bauteil eingelegt wird, eine Tangente an die formgebende Oberfläche der Form angelegt. Als Steigung wird der Winkel zwischen dieser Tangente und der Profilsehne des Rotorblatts angesehen. Als Winkel zwischen der Tangente und der Profilsehne wird der kleinere der beiden Winkel angesehen, die sich am Schnittpunkt der beiden Geraden ergeben.

Der Randbereich erstreckt sich ausgehend von einem äußeren Rand der Hauptform in Umfangsrichtung des herzustellenden Rotorblatts bevorzugt bis zu dem Punkt, an dem die Tangente an die Oberfläche der Form angelegt ist, betrachtet in der Profilebene des Rotorblatts.

Insbesondere ist gemäß einer weiteren Ausführungsform vorgesehen, dass die Steigung im Bereich der Hauptform, in dem das vorgefertigte Bauteil eingelegt wird, zwischen 45° und 90° beträgt. Ferner ist insbesondere vorgesehen, dass die Steigung größer als 60°, weiterhin insbesondere größer als 65°, 70°, 75°, 80° oder 85°, jedoch stets kleiner gleich 90° ist.

Gemäß einer weiteren Ausführungsform ist vorgesehen, dass das vorgefertigte Bauteil an einen äußeren Rand der Hauptform angrenzend in die Hauptform eingelegt wird.

Vorteilhaft wird durch die zuvor genannten Maßnahmen nicht nur der Herstellungsprozess des Rotorblatts beschleunigt sondern auch die Qualität des hergestellten Rotorblatts, vor allem im Bereich der äußeren Ränder der Rotorblattschalen, verbessert. Der äußere Rand der Rotorblattschalen ist der Bereich, in dem die Rotorblattschalen im fertigen Zustand des Rotorblatts zusammengefügt sind.

Als äußerer Rand der Hauptform wird entsprechend derjenige Rand der Form angesehen, an dem Material der Rotorblattschale beim Herstellungsprozess anliegt, welches sich im fertig hergestellten Rotorblatt dort befindet, wo eine Fügeebene zwischen den beiden Rotorblattschalen liegt.

Die zuvor beispielhaft für eine Rotorblattschale genannten Aspekte betreffen analog Rotorblattschalensegmente, bei denen es sich nicht um eine vollständige Rotorblattschale handelt. Solche Rotorblattschalensegmente sind bei einem fertig hergestellten Rotorblatt im Bereich der Rotorblattwurzel vorgesehen.

Die Aufgabe wird ferner gelöst durch ein Zwischenprodukt zur Verwendung bei der Herstellung eines Rotorblatts einer Windenergieanlage, wobei das Zwischenprodukt zum Herstellen eines Rotorblattschalensegments zur Anordnung im Bereich einer Rotorblattwurzel vorgesehen ist, und wobei das Zwischenprodukt ein Preform umfasst, in das ein Prefab, bei dem es sich um ein vorgefertigtes Bauteil des Rotorblatts aus einem Faserverbundwerkstoff handelt, wobei der Faserverbundwerkstoff mit Harz infusioniert und das Prefab ausgehärtet ist, eingebettet ist, wobei das Preform und das Prefab miteinander verbunden sind.

Das erfindungsgemäße Zwischenprodukt ist ferner durch diejenigen Merkmale gemäß weiterer Ausführungsformen fortgebildet, welche zuvor im Hinblick auf das Rotorblattschalensegment bzw. das Preform und das Prefab und deren gegenseitig angepasste Ausgestaltung erwähnt wurden. Ferner treffen auf das Zwischenprodukt gleiche oder ähnliche Vorteile zu, wie sie im Hinblick auf das Verfahren zum Herstellen des Rotorblatts erwähnt wurden.

Die Aufgabe wird außerdem gelöst durch ein Rotorblatt einer Windenergieanlage, welches nach einem Verfahren gemäß einer oder mehreren der genannten Ausführungsformen hergestellt ist.

Weiterhin wird die Aufgabe gelöst durch eine Windenergieanlage mit einem solchen Rotorblatt.

Auch auf das Rotorblatt und die Windenergieanlage treffen gleiche oder ähnliche Vorteile zu, wie sie bereits im Hinblick auf das Verfahren zum Herstellen eines Rotorblatts gemäß der verschiedenen Ausführungsformen erwähnt wurden.

Insbesondere ist der Durchmesser des Rotorblatts im Bereich seiner Rotorblattwurzel, weiterhin insbesondere an einem Anschlussflansch des Rotorblatts, der zum Anschluss des Rotorblatts an eine Rotornabe der Windenergieanlage dient, größer als 3 m. Bei Rotorblättern mit einem Flanschdurchmesser von mehr als 3 m ist die Zugänglichkeit der Hauptschalen aufgrund der großen Dimensionen erschwert, so dass der Einsatz von Prefabs, welche in Preforms eingebettet sind, besonders vorteilhaft ist. Dies gilt insbesondere im Hinblick auf die Ausführungsform, bei der das Prefab ein Hinterkantengurt des Rotorblatts ist. Ferner ist das Fasermaterial bevorzugt Glas- oder Kohlefasermaterial. Das Prefab im eingebetteten Zustand ist ferner insbesondere von dem Preform vollständig umschlossen. Das Preform kann einteilig oder mehrteilig sein. Die genannten Aspekte betreffen vorteilhaft alle Ausführungsformen.

Weitere Merkmale der Erfindung werden aus der Beschreibung erfindungsgemäßer Ausführungsformen zusammen mit den Ansprüchen und den beigefügten Zeichnungen ersichtlich. Im Folgenden werden Ausführungsbeispiele unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: eine schematische Darstellung einer Windenergieanlage;
- Fig. 2: eine schematische Draufsicht eines abschnittsweise dargestellten Rotorblatts;
- Fig. 3: eine schematische Querschnittsansicht in etwa entlang der Ebene III-III, die in Fig. 2 gezeigt ist;
- Fig. 4a, 4b: eine schematische Darstellung zweier beispielhaft aufeinander folgender Zustände während eines Verfahrens zum Herstellen eines Rotorblatts;
- Fig. 5: eine schematische Darstellung, in der die Einbettung eines Prefabs in ein zweiteiliges Preform dargestellt ist;
- Fig. 6: eine schematische Perspektivansicht eines Teils einer Saugseitenschale im Bereich der Hinterkante des Rotorblatts und
- Fig. 7: eine schematische Querschnittsansicht eines Preforms zur Herstellung eines Schalensegments, welches im Bereich der Hinterkante des Rotorblatts angeordnet wird, mit einer Aufnahme für einen als Prefab ausgeführten Hinterkantengurt.

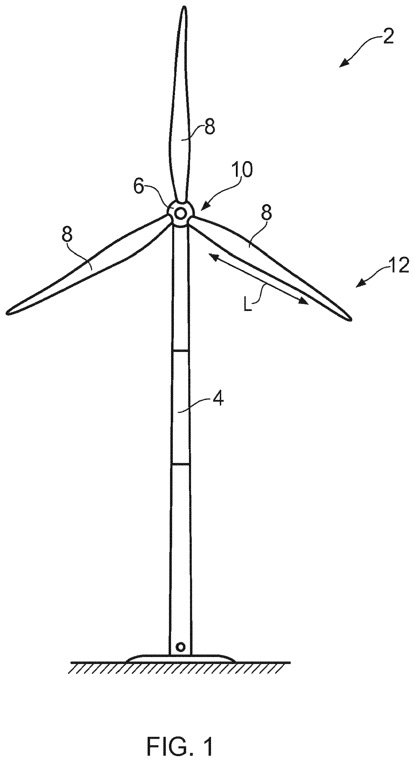

Fig. 1 zeigt eine Windenergieanlage 2 in schematischer Darstellung. Die Windenergieanlage 2 umfasst eine Tragestruktur 4, beispielsweise einen Turm. Ferner ist lediglich beispielhaft eine Onshore-Anlage dargestellt. Bei der Windenergieanlage 2 kann es sich ebenso um eine Offshore-Anlage handeln.

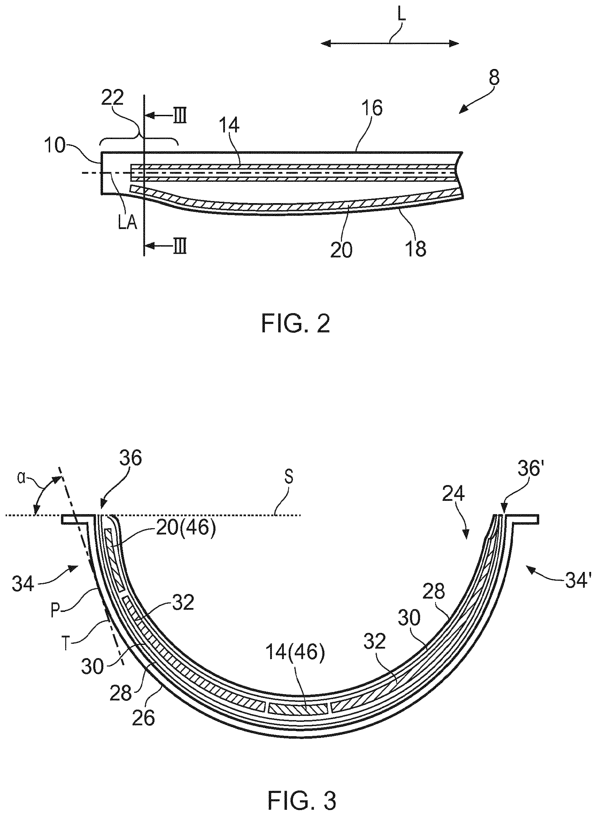

Am oberen Ende der Tragestruktur 4 befindet sich ein in Fig. 2 nicht sichtbares Maschinenhaus bzw. eine Gondel, an der eine Rotornabe 6 angeordnet ist. Rotorblätter 8 der Windenergieanlage 2, beispielhaft ist eine Windenergieanlage 2 mit drei Rotorblättern 8 dargestellt, erstrecken sich ausgehend von einer Rotorblattwurzel 10 in einer Längserstreckungsrichtung L des Rotorblatts 8 bis zu einer Rotorblattspitze 12 (beispielhaft dargestellt für eines der Rotorblätter 8). Der die Rotornabe 6 und die Rotorblätter 8 umfassende Rotor der Windenergieanlage 2 ist um eine im Wesentlichen horizontal ausgerichtete Drehachse rotierbar.

Fig. 2 zeigt in schematischer Draufsicht einen Abschnitt eines der Rotorblätter 8. Die Rotorblattwurzel 10 ist links dargestellt. Ausgehend von dieser erstreckt sich das Rotorblatt 8 in Längserstreckungsrichtung L entlang einer Längsachse LA des Rotorblatts 8. Entlang der Längsachse LA verläuft ein Hauptgurt 14 des Rotorblatts 8. Ferner umfasst das Rotorblatt 8 eine Vorderkante 16, die bei Rotation des Rotors der anströmenden Luft zugewandt ist. Ihr gegenüber liegt eine Hinterkante 18 an der strömungsabgewandten Seite des Rotorblatts 8. Entlang der Hinterkante 18 verläuft ein Hinterkantengurt 20, der zumindest bereichsweise im Wesentlichen in Längserstreckungsrichtung L verläuft.

Während des Betriebs der Windenergieanlage 2 wirken auf die Rotorblätter 8 Biegekräfte, die von den Gurten 14, 20 aufgenommen und über die Rotorblattwurzel 10 in die Rotornabe 6 eingeleitet werden.

Ausgehend von der Rotorblattwurzel 10 erstreckt sich ein Bereich der Rotorblattwurzel, der auch als Rotorblattwurzelbereich 22 bezeichnet werden soll. Dieser verläuft entlang des vollständigen Umfangs des Rotorblatts 8 in Längserstreckungsrichtung L und in Richtung der Rotorblattspitze 12. Im Rotorblattwurzelbereich 22 ist das Rotorblatt 8 im Betrieb der Windenergieanlage 2 aerodynamisch nicht oder nur vernachlässigbar gering wirksam. Im Rotorblattwurzelbereich 22 findet ein Übergang des Rotorblattquerschnitts von einem zumindest näherungsweise kreisrunden Querschnitt, wie er an der Rotorblattwurzel 10 vorliegt, in ein aerodynamisch wirksames Profil statt. Da über die Rotorblattwurzel 10 die auf das Rotorblatt 8 wirkenden Kräfte in die Rotornabe 6 übertragen werden, ist der Rotorblattwurzelbereich 22 mit der größten Wandstärke ausgeführt.

Die Größe des Rotorblattwurzelbereichs 22, also dessen Ausdehnung ausgehend von der Rotorblattwurzel 10 in Längserstreckungsrichtung L in Richtung der Rotorblattspitze 12, hängt von der Bauart des Rotorblatts 8 ab und variiert von Typ zu Typ. Beispielsweise erstreckt sich der Rotorblattwurzelbereich 22 in 5%, 10%, 15% oder 20% der Gesamtlänge des Rotorblatts 8, welche zwischen der Rotorblattwurzel 10 und der Rotorblattspitze 12 in Längserstreckungsrichtung L gemessen wird.

Das Rotorblatt 8 umfasst eine Saugseitenschale, deren äußere Oberfläche eine Saugseite des aerodynamisch wirksamen Profils des Rotorblatts 8 bildet. Auf der gegenüberliegenden Seite umfasst das Rotorblatt 8 eine Druckseitenschale, deren äußere Oberfläche eine Druckseite des Profils des Rotorblatts 8 bildet. Die Saugseitenschale und die Druckseitenschale sind im Bereich der Vorderkante 16 und der Hinterkante 18 des Rotorblatts 8 zusammengefügt, beispielsweise miteinander verklebt. Die Saugseitenschale und die Druckseitenschale werden in Negativformen hergestellt, welche als Hauptformen bezeichnet werden.

Fig. 3 zeigt in schematischer Querschnittsansicht, die in etwa entlang der in Fig. 2 mit III-III bezeichneten Ebene verläuft, eine Druckseitenschale 24 des Rotorblatts 8 in ihrer Hauptform 26. Die Darstellung in Fig. 3 zeigt mit anderen Worten einen Schnitt in einer Profilebene des Rotorblatts 8. Gezeigt ist ein Querschnitt der Druckseitenschale 24 im Rotorblattwurzelbereich 22. Ein Querschnitt des Rotorblatts 8 im Rotorblattwurzelbereich 22 ist zumindest näherungsweise kreisrund. Entsprechend folgt die Druckseitenschale 24 dem Umfang eines Halbkreises.

Zum Herstellen der Druckseitenschale 24 in der Hauptform 26 werden nacheinander mehrere Schichten Fasermaterial aufeinander gelegt. Eine erste Schicht, welche in die Hauptform 26 eingelegt wird, ist beispielsweise eine 2AX-Schalenlage 28, also ein Fasergelege, dessen Fasern gegenüber der Längserstreckungsrichtung L des Rotorblatts 8 in eine abweichende Richtung verlaufen. Beispielsweise ist die Faserausrichtung um +/- 45° oder +/- 30° gegenüber der Längserstreckungsrichtung L gedreht.

Es folgt eine UD-Schalenlage 30 (UD = unidirektional), deren Faserrichtung zumindest näherungsweise in Längserstreckungsrichtung L des Rotorblatts 8 verläuft. Auf die UD-Schalenlage 30 wird in einem zentralen Bereich der Druckseitenschale 24 der Hauptgurt 14 gelegt. Zu beiden Seiten des Hauptgurts 14 befindet sich Kernmaterial 32, beispielsweise Balsaholz oder Schaumstoff aus einem Polymermaterial. In Richtung einer Innenseite der Druckseitenschale 24 folgen anschließend erneut eine UD-Schalenlage 30 und eine 2AX-Schalenlage 28.

Die Hauptform 26 ist in ihren Randbereichen 34, 34' sehr steil. Das in den Randbereichen 34, 34' in die Hauptform 26 eingelegte Material bildet später diejenigen Bereiche der Druckseitenschale 24, welche an die Vorderkante 16 bzw. die Hinterkante 18 des Rotorblatts 8 angrenzen. So befindet sich in dem in Fig. 3 links dargestellten Randbereich 34 der Hinterkantengurt 20.

Als Randbereich 34 wird insbesondere derjenige Bereich verstanden, welcher an einen äußeren Rand 36, 36' der Hauptform 26 angrenzt. Das an den Rand 36, 36' der Hauptform 26 anschließende Material der Druckseitenschale 24 liegt im zusammengesetzten Zustand des Rotorblatts 8 im Bereich der Vorderkante 16 bzw. im Bereich der Hinterkante 18. So verläuft eine Profilsehne S, die abschnittsweise in punktierter Linie dargestellt ist, zwischen dem Rand 36 und einem weiteren Rand 36', an welchem sich der Bereich der Hinterkante 18 bzw. der Bereich der Vorderkante 16 der Druckseitenschale 24 befindet.

Im links dargestellten Randbereich 34 der Hauptform 26 ist eine Tangente T angelegt, die in strichpunktierter Linie dargestellt ist. Abweichend von der Darstellung in Fig. 3 wird die Tangente T an eine formgebende Oberfläche der Hauptform 26 angelegt, also deren Innenseite. Lediglich aus Gründen der klareren Darstellung in den Zeichnungen ist sie an deren Außenseite dargestellt.

Mit Hilfe der Tangente T ist die Größe des Randbereichs 34 in Umfangsrichtung und eine Steigung des Randbereichs 34 definiert. Der Randbereich 34 erstreckt sich ausgehend vom äußeren Rand 36 der Hauptform 26 in Umfangsrichtung der herzustellenden Druckseitenschale 24 bis zu dem Punkt P, an dem die Tangente T an die Oberfläche der Hauptform 26 angelegt ist. Mit anderen Worten erstreckt sich der Randbereich 34 zwischen dem Punkt P, an dem die Tangente T an die Hauptform 26 angelegt ist, und dem nächstgelegenen Rand 36'.

Die Steigung der Hauptform 26 im Randbereich 34 wird bevorzugt wie folgt definiert. Die Tangente T und die Profilsehne S schneiden sich in einem Punkt in der dargestellten Schnittebene. Der kleinere der beiden Winkel, die sich am Schnittpunkt der beiden Geraden ergeben, wird als Winkel α zwischen der Tangente T und der Profilsehne S angesehen und definiert die Steigung der Hauptform 26 im Randbereich 34.

Insbesondere ist der Wert des Winkels α größer gleich 45° und kleiner gleich 90°. Ferner ist das Maß des Winkels α insbesondere größer als 60°, 65°, 70°, 75°, 80° oder 85°, wobei der Winkel α stets kleiner gleich 90° ist.

Lediglich aus Gründen der Übersichtlichkeit ist die Tangente T, der Winkel α, den diese mit der Profilsehne S einschließt, und der Punkt P an der in Fig. 3 linken Seite der Hauptform 26 für den Randbereich 34 dargestellt. An der gegenüberliegenden Seite der Hauptform 26 erstreckt sich der weitere Randbereich 34', welcher analog zum Randbereich 34 definiert ist.

Zum Herstellen der Druckseitenschale 24 werden die Fasergelege 28, 30 sowie die Rotorblattgurte 24, 20 in die Hauptform 26 eingelegt. In den Randbereichen 34, 34' besteht aufgrund der großen Steilheit der Hauptform 26 bei herkömmlichen Verfahren die Gefahr, dass die einzelnen Faserlagen oder die Rotorblattgurte, insbesondere der Hinterkantengurt 20, aufgrund ihrer/seines Eigengewichts abrutschen bzw. abrutscht. Daher ist es bei herkömmlichen Verfahren notwendig, die Faserlagen in den Randbereichen 34, 34' gesondert zu fixieren, was zeitaufwendig und daher unökonomisch ist.

Gemäß Aspekten der Erfindung werden in den Randbereichen 34, 34', Preforms mit eingebetteten Prefabs eingesetzt. Diese Halbzeuge oder Zwischenprodukte, welche bei der Herstellung des Rotorblatts 8 bzw. der Rotorblattschale einer Windenergieanlage 2 Verwendung finden, verhindern ein Abrutschen der Faserlagen, insbesondere in den Randbereichen 34, 34', und ermöglichen außerdem die Herstellung des Rotorblatts 8 in wesentlich geringerer Herstellungszeit.

Unter einem "Prefab" wird ein vorgefertigtes Bauteil eines Rotorblatts 8 einer Windenergieanlage 2 aus einem Faserverbundwerkstoff verstanden, welches mit Harz infusioniert und ausgehärtet ist. Gemäß dem dargestellten Ausführungsbeispiel sind die Rotorblattgurte 14, 20 Prefabs 46. Mit anderen Worten sind also der Hauptgurt 14 und der Hinterkantengurt 20 jeweils ein Prefab 46.

Als "Preform" wird ein endkonturnahes Bauteil des Rotorblatts 8 der Windenergieanlage 2 aus einem Fasermaterial verstanden, welches nicht infusioniert ist. Die Fasern, Fasergelege oder Fasermatten sind untereinander verbunden, um dem Preform eine ausreichende Stabilität und Steifheit zu verleihen, so dass dieses während des Herstellungsprozesses des Rotorblatts 8 sicher handhabbar ist. Beispielsweise werden die Fasergelege oder Fasermatten miteinander vernäht oder teilweise verschmolzen. Ferner ist insbesondere vorgesehen, dass das Fasermaterial des Preforms mit einem Bindemittel behandelt ist, so dass dieses miteinander verklebt.

Bevor ein Rotorblattschalensegment, beispielsweise die in Fig. 3 gezeigte Druckseitenschale 24 des Rotorblatts 8, in der Hauptform 26 hergestellt wird, wird ein Preform hergestellt und anschließend ein Prefab 46 in das hergestellte Preform eingebettet.

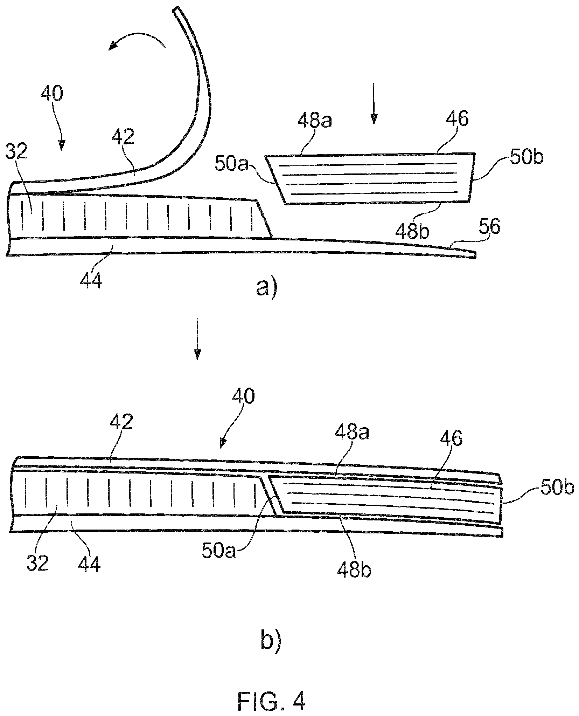

In Fig. 4 a) und b) sind beispielhaft zwei aufeinander folgende Zustände während des Herstellungsverfahrens eines Rotorblattes 8 gezeigt. Das abschnittsweise dargestellte Preform 40 ist eine Sandwich-Struktur aus einem oberen Fasergelege 42 und einem unteren Fasergelege 44. Flächig zwischen den Fasergelegen 42, 44 befindet sich Kernmaterial 32. Beispielsweise ist das obere Fasergelege 42 die auf der Innenseite der Druckseitenschale 24 vorhandene 2 AX-Schalenlage 28 und UD-Schalenlage 30. Bei dem unteren Fasergelege 44 handelt es sich beispielsweise um die auf der Außenseite der Druckseitenschale 24 vorhandene 2 AX-Schalenlage 28 und UD-Schalenlage 30.

Zum Herstellen des Preforms 40 werden die Fasergelege 42, 44 und das Kernmaterial 32 flächig aufeinander geschichtet und beispielsweise mit einem Binder miteinander verbunden.

In Fig. 4 a) ist ein Zustand gezeigt, in dem das obere Fasergelege 42 noch nicht vollflächig mit dem Kernmaterial 32 verbunden ist. Zu diesem Zeitpunkt wird ein Prefab 46, bei dem es sich beispielsweise um einen Rotorblattgurt 14, 20, insbesondere um den Hinterkantengurt 20, handelt, in das Preform 40 eingebettet. Das Einlegen des Prefabs 46 ist mit einem senkrecht nach unten weisenden Pfeil dargestellt.

In einem sich anschließenden Schritt, der in Fig. 4 b) dargestellt ist, ist das Prefab 46 in das Preform 40 eingebettet. Das Preform 40 umschließt das Prefab 46 an drei Seiten. Anschließend werden das Preform 40 und das Prefab 46 miteinander verbunden, hierzu wird beispielsweise ein Binder verwendet.

Beispielsweise ist das Prefab 46 im Wesentlichen quaderförmig, wobei es nicht zwingend notwendig ist, dass einander gegenüberliegende Flachseiten parallel zueinander angeordnet sind. So umfasst das Prefab 46 zwei einander gegenüberliegende große Seitenflächen 48a, 48b und zwei einander gegenüberliegende kleine Seitenflächen 50a, 50b. Jeweils eine große und eine kleine Seitenfläche stoßen an einer Längskante des Prefabs aneinander. Bevorzugt ist das Prefab 46 ein längliches Bauteil, dessen Seitenflächen nicht jedoch dessen Stirnflächen als große bzw. kleine Seitenflächen 48a, 48b, 50a, 50b bezeichnet werden. Mit anderen Worten erstrecken sich die großen und kleinen Seitenflächen 48a, 48b, 50a, 50b in einer Längserstreckungsrichtung des Prefabs 46. Handelt es sich bei dem Prefab 46 um einen Rotorblattgurt 14, 20, so verläuft die Längserstreckungsrichtung des Prefabs 46 näherungsweise parallel zur Längserstreckungsrichtung L des Rotorblatts 8.

Das Prefab 46 wird in das Preform 40 eingebettet, indem Fasergelege des Preforms 40, beispielsweise die oberen und unteren Fasergelege 42, 44, an die zwei großen Seitenflächen 48a, 48b des Prefabs 46 angelegt werden. Das obere und untere Fasergelege 42, 44 überdeckt dabei die großen Seitenflächen 48a, 48b des Prefabs 46 zumindest teilweise, insbesondere vollständig. Dieser Zustand ist in Fig. 4 b) gezeigt. Die kleine Seitenfläche 50a des Prefabs 46 grenzt an das Kernmaterial 32 des Preforms 40 an. Die Seitenflächen im dargestellten Ausführungsbeispiel von Fig. 4 a) und b) grenzen die beiden großen Seitenflächen 44a, 44b und die kleine Seitenfläche 50a unmittelbar an das obere bzw. untere Fasergelege 42, 44 bzw. an das Kernmaterial 32 an.

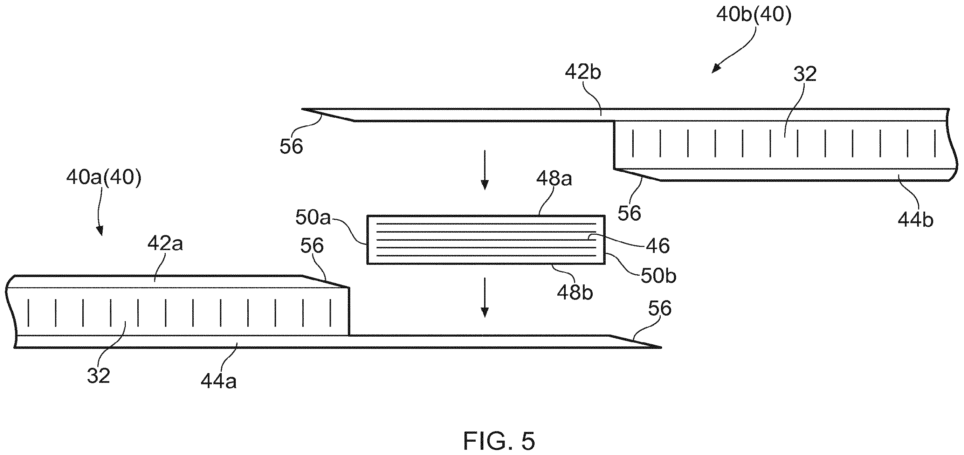

Fig. 5 zeigt ein weiteres Ausführungsbeispiel, bei dem ein Prefab 46, beispielsweise ein Rotorblattgurt 14, 20, in ein zweiteiliges Preform 40 eingebettet wird.

Das Preform 40 umfasst einen ersten Teil 40a und einen zweiten Teil 40b. Die beiden Teile 40a, 40b sind jeweils als Sandwich-Struktur aufgebaut, d. h. beide Teile umfassen jeweils ein oberes Fasergelege 42a bzw. 42b und ein unteres Fasergelege 44a bzw. 44b. Zwischen dem oberen und unteren Fasergelege 42a, 42b, 44a, 44b befindet sich jeweils Kernmaterial 32. Zum Einbetten des Prefabs 46 wird der erste und zweite Teil 40a, 40b des Preforms 40 in der mit Pfeilen dargestellten Richtung zusammengefügt, wobei das Prefab 46 vollständig von der Preform 40 umgeben wird. Konkret bedeutet dies, dass die große Seitenfläche 48a des Prefabs 46 direkt an dem oberen Fasergelege 42b des zweiten Teils 40b des Preforms 40 anliegt. Die gegenüberliegende große Seitenfläche 48b des Prefabs 46 liegt direkt am unteren Fasergelege 44a des ersten Teils 40 des Preforms 40 an. Die kleine Seitenfläche 50a liegt direkt am Kernmaterial des ersten Teils 40a des Preforms 40 an, ihre gegenüberliegende kleine Seitenfläche 50b liegt direkt am Kernmaterial 32 des zweiten Teils 40b des Preforms 40 an.

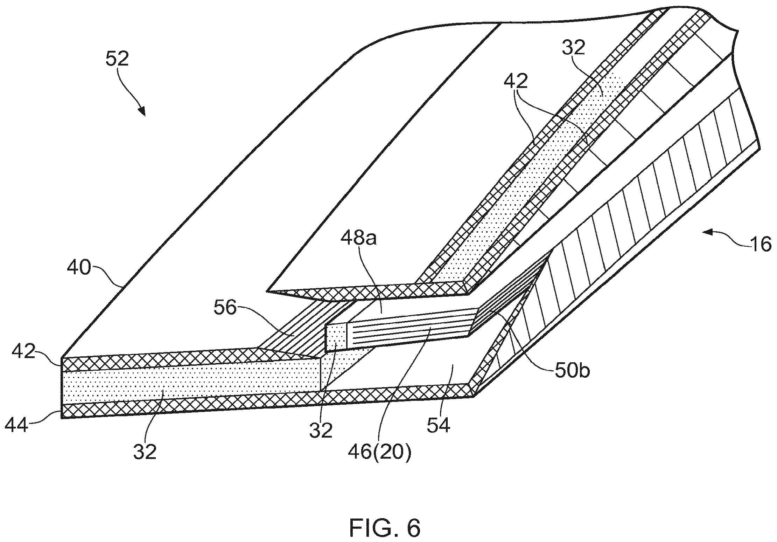

Fig. 6 zeigt in schematischer Perspektivansicht einen Teil einer Saugseitenschale 52 im Bereich der Hinterkante 18 des Rotorblatts 8. Das Preform 40 umfasst ein oberes Fasergelege 42, ein unteres Fasergelege 44 und ein zwischen diesen Fasergelegen 42, 44 eingebettetes Kernmaterial 32. Das untere Fasergelege 44 ist ferner im Bereich der Hinterkante 16 an der kleinen Seitenfläche 50b des Prefabs 46, bei dem es sich beispielhaft um den Hinterkantengurt 20 handelt, hochgezogen. Beim Herstellen des Preforms 40 wird also eine an die Ausmaße des Prefabs 46 angepasste Aufnahme 54 vorgesehen, in welcher beispielhaft der Hinterkantengurt 20 als Prefab 46 aufgenommen wird. An der kleinen Seitenfläche 50b des Prefabs 46 liegt also ebenfalls Fasermaterial, im dargestellten Ausführungsbeispiel ein Teil des unteren Fasergeleges 44.

Beispielhaft umfasst das Prefab 46 neben ausgehärtetem und infusioniertem Fasermaterial auch Kernmaterial 32. Entlang einer großen Seitenfläche 48a ist ein weiterer Teil des Preforms 40 angeordnet, welcher neben oberem Fasermaterial 42 ebenfalls Kernmaterial 32 umfasst. Dieses ist in das obere Fasermaterial 42 eingebettet.

Die zuvor im Hinblick auf eine Druckseitenschale 24 genannten Aspekte betreffen ebenso in analoger Weise Rotorblattschalensegmente, bei denen es sich nicht um eine vollständige Rotorblattschale handelt.

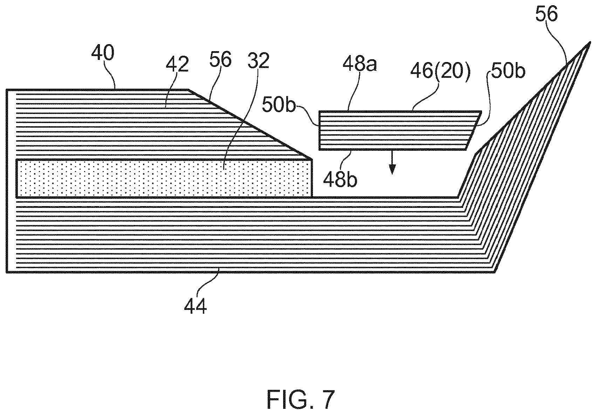

Fig. 7 zeigt beispielhaft in einer schematischen Querschnittsansicht einen Ausschnitt eines Hinterkantenschalensegments umfassend ein Preform 40 und ein Prefab 46 in Form des Hinterkantengurts 20. Zwischen dem unteren Fasergelege 44 und dem oberen Fasergelege 42 befindet sich Kernmaterial 32.

In Fig. 7 nicht dargestellt ist ein weiterer Teil des Preforms 40, welcher entlang einer großen Seitenfläche 48a des Prefabs 46 angeordnet wird. Mit Hilfe dieses nicht dargestellten Teils des Preforms 40 wird das Prefab 46 wiederum vollständig in das Preform 40 eingebettet.

Das obere und untere Fasermaterial 42, 42a, 42b, 44, 44a, 44b ist bevorzugt entlang einer Ebene, welche gegenüber der Faserrichtung gekippt ist, angefast. Derartige Fasen 56 sind in den Darstellungen der Fig. 4 bis 7 gezeigt.

Miteinander zusammenwirkende Fasen 56 sind in entgegengesetzte Richtungen angefast. Dies trifft beispielsweise für die zusammenwirkenden Fasen 56 der oberen Fasergelege 42a, 42b des ersten und zweiten Teils 40a, 40b des in Fig. 5 gezeigten Preforms 40 zu. Gleiches gilt für die unteren Fasergelege 44a, 44b dieses Preforms 40. Ferner ist es ebenso vorgesehen, dass das Prefab 46 mit einer Fase 56 versehen ist, diese ist beispielhaft an der kleinen Seitenfläche 50a in Fig. 4 gezeigt oder an der kleinen Seitenfläche 50b in den Fig. 6 und 7 dargestellt.

Nachdem das Preform 40 und das Prefab 46 zusammengefügt wurden, das Prefab 46 also in das Preform 40 eingebettet wurde, werden das Preform 40 und das Prefab 46 miteinander verbunden, beispielsweise mit Hilfe eines Binders. Das derart hergestellte Halbzeug wird in die Hauptform 26 (vgl. Fig. 3) eingelegt, anschließend wird in der Hauptform 26 das eingelegte Preform 40 gemeinsam mit dem darin eingebetteten Prefab 46 in einem Harzinfusionsverfahren mit weiteren in der Hauptform 26 vorhandenen Prefabs 46, beispielsweise dem Hauptgurt 14, und/oder weiteren Fasergelegen, beispielsweise den 2AX-Schalenlagen 28 und den UD-Schalenlagen 30 zu einem Rotorblattschalensegment verbunden. In diesem Kontext ist die Druckseitenschale 24 beispielhaft das Rotorblattschalensegment.

Es ist ebenso möglich, dass kleinere Teile des Rotorblatts 8, beispielsweise Schalensegmente, welche im Wurzelbereich 22 in Längserstreckungsrichtung L oder in Umfangsrichtung, also senkrecht dazu, angeordnet werden, mit dem zuvor beschriebenen Verfahren hergestellt werden.

Vorteilhaft erlaubt das Verfahren gemäß den beschriebenen Ausführungsbeispielen eine parallelisierte Herstellung von Halbzeugen aus Prefabs 46 und Preforms 40, so dass diese zeitgleich zur Herstellung des Rotorblatts 8 zur Verfügung stellen. So ist es bevorzugt möglich, ein Rotorblatt 8 binnen 24 Stunden zu fertigen.

In den Zeichnungen sind jeweils gleiche oder gleichartige Elemente und/oder Teile mit denselben Bezugsziffern versehen, so dass von einer erneuten Vorstellung jeweils abgesehen wird.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein. Im Rahmen der Erfindung sind Merkmale, die mit "insbesondere" oder "vorzugsweise" gekennzeichnet sind, als fakultative Merkmale zu verstehen.

### Bezugszeichenliste

- 2: Windenergieanlage
- 4: Tragestruktur
- 6: Rotornabe
- 8: Rotorblatt
- 10: Rotorblattwurzel
- 12: Rotorblattspitze
- 14: Hauptgurt
- 16: Vorderkante
- 18: Hinterkante
- 20: Hinterkantengurt
- 22: Rotorblattwurzelbereich
- 24: Druckseitenschale
- 26: Hauptform
- 28: 2AX-Schalenlage
- 30: UD-Schalenlage
- 32: Kernmaterial
- 34, 34': Randbereich
- 36, 36': Rand
- 40, 40a, 40b: Preform
- 42, 42a, 42b: oberes Fasergelege
- 44, 44a, 44b: unteres Fasergelege
- 46: Prefab
- 48a, 48b: große Seitenflächen
- 50a, 50b: kleine Seitenflächen
- 52: Saugseitenschale
- 54: Aufnahme
- 56: Fase

- L: Längserstreckungsrichtung
- LA: Längsachse
- T: Tangente
- S: Profilsehne
- P: Punkt
- α: Winkel

## Patentansprüche

1. Verfahren zum Herstellen eines Rotorblatts (8) einer Windenergieanlage (2), wobei zumindest ein im Bereich (22) einer Rotorblattwurzel (10) vorgesehenes Rotorblattschalensegment (24) des Rotorblatts (8) in einer als Negativ-Form ausgebildeten Hauptform (26) hergestellt wird und das Rotorblattschalensegment (24) mit zumindest einem weiteren Rotorblattschalensegment (24) zum Herstellen zumindest eines Teils des Rotorblatts (8) zusammengefügt wird, **dadurch gekennzeichnet, dass**, bevor das Rotorblattschalensegment (24) in der Hauptform (26) hergestellt wird, ein Preform (40) hergestellt wird und anschließend ein Prefab (46), bei dem es sich um ein vorgefertigtes Bauteil des Rotorblatts (8) aus einem Faserverbundwerkstoff handelt, wobei der Faserverbundwerkstoff mit Harz infusioniert und das Prefab (46) ausgehärtet ist, in das hergestellte Preform (40) eingebettet und mit diesem zu einer Baueinheit verbunden wird und das so erhaltene vorgefertigte Bauteil anschließend in die Hauptform (26) eingelegt wird, wobei anschließend das in die Hauptform eingelegte Preform (40) gemeinsam mit dem darin eingebetteten Prefab (46) in einem Harzinfusionsverfahren mit weiteren in die Hauptform (26) eingelegten Prefabs (46) und/oder Preforms (40) und/oder Fasergelegen (28, 30) zu dem Rotorblattschalensegment (24) verbunden werden.

2. Verfahren zum Herstellen eines Rotorblatts (8) nach Anspruch 1, **dadurch gekennzeichnet, dass** das Preform (40) eine Sandwich-Struktur aus Fasergelegen (42, 44) und flächig zwischen den Fasergelegen (42, 44) eingelegtem Kernmaterial (32) ist, wobei zum Herstellen des Preforms (40) Fasergelege (42, 44) und Kernmaterial (32) flächig aufeinander geschichtet und miteinander verbunden werden, wobei das Prefab (46) zwei einander gegenüberliegende große Seitenflächen (48a, 48b) und zwei einander gegenüberliegende kleine Seitenflächen (50a, 50b) aufweist, wobei die großen und die kleinen Seitenflächen (48a, 48b, 50a, 50b) jeweils an zwei ihrer Seitenkanten aneinanderstoßen, und wobei das Prefab (46) in das Preform (40) eingebettet wird, indem Fasergelege (42, 44) des Preforms (40) an zumindest eine der zwei großen Seitenflächen (48a, 48b) des Prefabs (46) angelegt wird und das Fasergelege (42, 44) die zumindest eine große Seitenfläche (48a, 48b) zumindest teilweise, insbesondere vollständig, überdeckt.

3. Verfahren zum Herstellen eines Rotorblatts (8) nach Anspruch 2, **dadurch gekennzeichnet, dass** das Prefab (46) in das Preform (40) eingebettet wird, indem zumindest eine kleine Seitenfläche (50a, 50b) an das Kernmaterial (32) des Preforms (40) angelegt wird.

4. Verfahren zum Herstellen eines Rotorblatts (8) nach Anspruch 2 oder 3, **dadurch gekennzeichnet, dass** beim Herstellen des Preforms (40) eine an die Ausmaße des Prefabs (46) angepasste Aufnahme (54) vorgesehen wird, wobei die Aufnahme (54) so gestaltet ist, dass beim Einbetten des Prefabs (46) in das Preform (40) an zumindest einer kleinen Seitenfläche (50a, 50b) des Prefabs (46) Fasergelege des Preforms (46) anliegt.

5. Verfahren zum Herstellen eines Rotorblatts (8) nach einem der Ansprüche 1 bis 4, **dadurch gekennzeichnet, dass** das Prefab (46) ein Rotorblattgurt, insbesondere ein Hauptgurt (14) oder ein Hinterkantengurt (20), ist.

6. Verfahren zum Herstellen eines Rotorblatts (8) nach einem der Ansprüche 1 bis 5, **dadurch gekennzeichnet, dass** das Rotorblattschalensegment eine Druckseitenschale (24) oder eine Saugseitenschale ist und zum Herstellen des Rotorblatts (8) die Druckseitenschale (24) und die Saugseitenschale zusammengefügt werden.

7. Verfahren zum Herstellen eines Rotorblatts (8) nach einem der vorhergehenden Ansprüche, **dadurch gekennzeichnet, dass** das durch das Verbinden des Prefabs mit dem Preform zu einer Baueinheit erhaltene vorgefertigte Bauteil in einen Bereich (34) der Hauptform (26) eingelegt wird, dessen Steigung (T), betrachtet in einer Profilebene des Rotorblatts, mit einer Profilsehne (S) des Rotorblatts (8) einen Winkel (α) einschließt, der größer als 45° ist.

8. Verfahren zum Herstellen eines Rotorblatts (8) nach dem vorhergehenden Anspruch, **dadurch gekennzeichnet, dass** das durch das Verbinden des Prefabs mit dem Preform zu einer Baueinheit erhaltene vorgefertigte Bauteil an einen äußeren Rand (36, 36') der Hauptform (26) angrenzend in die Hauptform (26) eingelegt wird.

## Claims

1. A method of producing a rotor blade (8) of a wind turbine (2), wherein at least one rotor blade shell segment (24) of the rotor blade (8) provided in the region (22) of a rotor blade root (10) is produced in a main mold (26) which is designed as a negative mold, and the rotor blade shell segment (24) is assembled with at least one additional rotor blade shell segment (24) to produce at least a portion of the rotor blade (8), **characterized in that**, before the rotor blade shell segment (24) is produced in the main mold (26), a preform (40) is produced and, subsequently, a prefab (46), which is a prefabricated component of the rotor blade (8) made from a fiber composite material, wherein the fiber composite material is infused with resin and the prefab (46) is cured, is embedded in the produced preform (40), and the prefab (46) and the preform (40) are joined so as to form a structural unit and the prefabricated component thus obtained is then placed into the main mold (26), wherein the preform (40) placed in the main mold, together with the prefab (46) embedded therein, is then joined, in a resin infusion method, together with further prefabs (46) and / or preforms (40) and / or fiber fabrics (28, 30) placed in the main mold, so as to form the rotor blade shell segment (24).

2. A method of producing a rotor blade (8) according to claim 1, **characterized in that** the preform (40) is a sandwich structure made from fiber fabrics (42, 44) and core material (32) which is inserted between the fiber fabrics (42, 44) in a planar manner, wherein, in order to produce the preform (40), fiber fabrics (42, 44) and core material (32) are placed one on top of the other in a planar manner and joined to each other, wherein the prefab (46) has two large side surfaces (48a, 48b) opposite one another and two small side surfaces (50a, 50b) opposite one another, wherein each of the large and small side surfaces (48a, 48b, 50a, 50b) respectively abut on two of their side edges, and wherein the prefab (46) is embedded in the preform (40) **in that** fiber fabric (42, 44) of the preform (40) is placed against at least one of the two large side surfaces (48a, 48b) of the prefab (46), and the fiber fabric (42, 44) at least partially, in particular completely, covers the at least one large side surface (48a, 48b).

3. The method of producing a rotor blade (8) according to claim 2, **characterized in that** the prefab (46) is embedded in the preform (40) **in that** at least one small side surface (50a, 50b) is placed against the core material (32) of the preform (40).

4. The method of producing a rotor blade (8) according to claim 2 or 3, **characterized in that**, when the preform (40) is being produced, a seat (54) adapted to the dimensions of the prefab (46) is provided, wherein the seat (54) is designed so that, when the prefab (46) is being embedded in the preform (40), fiber fabrics of the preform (46) rests against at least one small side surface (50a, 50b) of the prefab (46).

5. The method of producing a rotor blade (8) according to any one of claims 1 to 4, **characterized in that** the prefab (46) is a rotor blade spar cap, in particular a main spar cap (14) or a trailing edge spar cap (20).

6. The method of producing a rotor blade (8) according to any one of claims 1 to 5, **characterized in that** the rotor blade shell segment is a pressure side shell (24) or a suction side shell, and the pressure side shell (24) and the suction side shell are joined together in order to produce the rotor blade (8).

7. The method of producing a rotor blade (8) according to any one of the preceding claims, **characterized in that** the prefabricated component obtained by joining the prefab with the preform (40) to form a structural unit is placed in a region (34) of the main mold (26) the gradient (T) of which, as seen in a profile plane of the rotor blade, includes an angle (α) with a profile cord (S) of the rotor blade (8) which is greater than 45°.

8. The method of producing a rotor blade (8) according to the preceding claim, **characterized in that** the prefabricated component obtained by joining the prefab with the preform to form a structural unit is placed in the main mold (26) adjacent to an outer edge (36, 36') of the main mold (26).

## Revendications

1. Procédé de fabrication d'une pale de rotor (8) d'une éolienne (2), dans lequel au moins un segment de coque de pale de rotor (24) de la pale de rotor (8) prévu dans la zone (22) d'une emplanture de pale de rotor (10) est fabriqué dans un moule principal (26) formé comme un moule négatif, et le segment de coque de pale de rotor (24) est assemblé avec au moins un autre segment de coque de pale de rotor (24) pour fabriquer au moins une partie de la pale de rotor (8), **caractérisé en ce que**, avant la fabrication du segment de coque de pale de rotor (24) dans le moule principal (26), une préforme (40) est fabriquée, puis un préfabriqué (46) qui est un composant préfabriqué de la pale de rotor (8) constitué d'un matériau composite à base de fibres, le matériau composite à base de fibres étant soumis à une infusion de résine et le préfabriqué (46) étant durci, est noyé dans la préforme fabriquée (40) et relié à celle-ci pour former une unité de construction, et le composant préfabriqué ainsi obtenu est ensuite placé dans le moule principal (26), dans lequel la préforme (40) placée dans le moule principal est ensuite reliée, par un procédé d'infusion de résine, conjointement avec le préfabriqué (46) noyé dans celle-ci, à d'autres préfabriqués (46) et / ou à d'autres préformes (40) et / ou à d'autres non-tissés de fibres (28, 30) placés dans le moule principal (26), pour obtenir le segment de coque de pale de rotor (24).

2. Procédé de fabrication d'une pale de rotor (8) selon la revendication 1, **caractérisé en ce que** la préforme (40) est une structure en sandwich constituée de non-tissés de fibres (42, 44) et d'un matériau de noyau (32) placé à plat entre les non-tissés de fibres (42, 44), dans lequel procédé, pour la fabrication de la préforme (40), les non-tissés de fibres (42, 44) et le matériaux de noyau (32) sont disposés en couches, à plat, l'un sur l'autre et sont liés l'un à l'autre, dans lequel le préfabriqué (46) comporte deux grandes faces latérales opposées l'une à l'autre (48a, 48b) et deux petites faces latérales (50a, 50b) opposées l'une à l'autre, dans lequel les grandes et les petites faces latérales (48a, 48b, 50a, 50b) sont respectivement contigües sur deux de leurs bords latéraux, et dans lequel le préfabriqué (46) est noyé dans la préforme (40) en appliquant des non-tissés de fibres (42, 44) de la préforme (40) sur au moins l'une des deux grandes faces latérales (48a, 48b) du préfabriqué (46), et le non-tissé de fibres (42, 44) recouvrant au moins partiellement, en particulier entièrement, ladite au moins une grande face latérale (48a, 48b).

3. Procédé de fabrication d'une pale de rotor (8) selon la revendication 2, **caractérisé en ce que** le préfabriqué (46) est noyé dans la préforme (40) en appliquant au moins une petite face latérale (50a, 50b) sur le matériau de noyau (32) de la préforme (40).

4. Procédé de fabrication d'une pale de rotor (8) selon la revendication 2 ou la revendication 3, **caractérisé en ce qu'**un logement (54) adapté aux dimensions du préfabriqué (46) est prévu lors de la fabrication de la préforme (40), dans lequel le logement (54) est configuré de sorte que, lorsque le préfabriqué (46) est noyé dans la préforme (40), des non-tissés de fibres de la préforme (46) est appliqué sur au moins une petite surface latérale (50a, 50b) du préfabriqué (46).

5. Procédé de fabrication d'une pale de rotor (8) selon l'une quelconque des revendications 1 à 4, **caractérisé en ce que** le préfabriqué (46) est une membrure de pale de rotor, en particulier une membrure principale (14) ou une membrure (20) de bord de fuite.

6. Procédé de fabrication d'une pale de rotor (8) selon l'une quelconque des revendications 1 à 5, **caractérisé en ce que** le segment de coque de pale de rotor est une coque d'intrados (24) ou une coque d'extrados, et la coque d'intrados (24) et la coque d'extrados sont assemblées pour fabriquer la pale de rotor (8).

7. Procédé de fabrication d'une pale de rotor (8) selon l'une quelconque des revendications précédentes, **caractérisé en ce que** le composant préfabriqué obtenu par relier le préfabriqué et la préforme pour obtenir une unité de construction est placé dans une zone (34) du moule principal (26) dont l'inclinaison (T), considérée dans un plan de coupe de la pale de rotor, par rapport à une corde (S) de la pale de rotor (8) est à un angle (α) qui est supérieur à 45°.

8. Procédé de fabrication d'une pale de rotor (8) selon la revendication précédente, **caractérisé en ce que** le composant préfabriqué obtenu par relier le préfabriqué et la préforme pour obtenir une unité de construction est placé dans le moule principal (26) adjacent à un bord extérieur (36, 36') du moule principal (26).
